# EUROPEAN PATENT APPLICATION

(11) **EP 3 587 356 A1**
(43) Date of publication of application: **01.01.2020**
(21) Application number: 18382463.0
(22) Date of filing: 22.06.2018
(51) Int. Cl.: C02F 1/24, B01D 21/00, B03D 1/14, B01D 21/24, B01D 21/18, B01D 21/04

(54) **SYSTEM FOR THE TREATMENT OF WATER BY MEANS OF DISSOLVED AIR FLOTATION AND SEDIMENTATION**

(71) Applicant: TECNOQUIMICA EXTERIOR, S.A.U. (TECEXSA), 20850 MENDARO (Gipuzkoa) (ES)
(72) Inventor: SALUTREGUI ARMAS, José Manuel, 20850 MENDARO (Gipuzkoa) (ES)
(74) Representative: Herrero & Asociados, S.L.

(57) **Abstract**

The present invention relates to an integrated system for the treatment of water by means of dissolved air flotation and sedimentation, comprising a tank (10) with at least one flotation area (11) and another lamella area (12) and a sludge collection carriage on the surface thereof, characterized in that it further comprises a raw water inlet conduit (1) which is divided into an upper part and another lower part such that when the device works as a settling tank, the raw water enters through the lower branch (1b) and the water to be treated flows from the bottom to the top of the lamella area (12), flowing through the lamellas such that solid waste decants at the bottom; in contrast, in flotation mode the raw water enters through the upper conduit (1a), such that the water flows first through the flotation area (11) and then from the top to the bottom of the lamella area (12).

## Description

### Field of the Art

The invention corresponds to the water treatment sector, particularly to systems for clarification by means of dissolved air flotation and clarification by means of decantation.

### Background of the Invention

Suspended solid particles in any type of water containing non-dissolved particles (wastewater, potable water, sea water, industrial water, etc.) tend to settle (decant) at the bottom of the tank or float according to their density. During sedimentation, the water flow to be treated is an upward flow, such that the suspended solids gradually build up at the bottom of the basin due to specific density, while the clarified water is collected from the surface.

In turn, dissolved air flotation (DAF) systems are systems separating particles suspended in contaminated water by means of air microbubbles. In these systems, unlike in sedimentation, the separated solids are removed from the surface and the clarified water is or should be collected from the lower part. The microbubbles adhere to the suspended solids as they float upwards to an upper separation system. The DAF tank for purifying water that work by supersaturation is divided into two chambers or receptacles. The first chamber is referred to as the contact area and the second chamber is the separation/clarification area; both chambers are separated by a deflector wall or baffle. The purpose of the contact area is to make it easier for floc particles (aggregate consisting of suspended solids and chemicals which favor sedimentation or flotation) and air microbubbles to collide with one another and come together. The air microbubbles with flocs enclosed therein are referred to as microbubble-floc aggregates. Water at the entry introduces the suspension of aggregates, free bubbles, and flocculated particles (that have not become aggegates) to the second chamber, that is the separation area. Here, the free bubbles and the aggregates can move up to the surface of the tank due to the low density of the microbubble-air aggregate and the buoyant force of the air microbubbles. A floating layer made up of a mixture of bubbles and flocculate particles dragged by the bubbles is formed on the surface of the tank. This surface layer consolidates over time, producing sludge, referred to as floated sludge layer, which is removed from the tank by means of a surface sweeper system. The clarified water is drawn from the lower part of the tank and part of this water enters the system again as a recirculation flow.

The equipment specifically handled nowadays for removing sedimented solids are not efficient for removing particles that tend to float and vice versa. The final operator of these systems often find themselves dealing with an installation designed for solids of a certain nature that only covers part of their needs. There are no systems which allow combining the two processes into one. Furthermore, given the increasing requirement to reduce installation footprint, there is a tendency to work with loading rate that are higher than the rates the physical process can naturally handle (the higher the loading rate, the lower the treatment surface, and therefore the higher the CAPEX or capital expenditure savings will be), thereby leading to the additional problems of having to incorporate the use of lamellas, i.e., plates which allow increasing the hydraulic load of the system and are placed inside the clarifiers, either the settling tank or the DAF unit. By placing this system that must be suspended mid-height between the bottom and the surface of the clarifiers, conventional settled solid collection systems cannot be used.

### Summary of the Invention

The aim of the present invention is to provide a system which can be used alternately as a dissolved air flotation system or a sedimentation system that adapts to a more-than-likely change in the chemical conditions of the water to be treated, preventing facility design risk due to having to choose between one of the two technologies (causing OPEX (operating expense) problems), or avoiding the need to arrange both technologies in series, using one system or the other according to operating conditions (water quality), which entails increasing the CAPEX (investment cost) and the required footprint. Furthermore, this invention also solves the problems relating to the collection of sludge located both on the surface and at the bottom. The use of the system consisting of lamellas is essential for the development of this invention.

For this purpose, the present invention provides a system in which the operator can choose between a flotation process and another sedimentation process depending on the type of water to be treated. To that end, the solution for the treatment of water of the invention comprises a system provided with a separate treatment tank in an aggregation area and another area with lamellas and means for feeding water into one area or the other. In flotation mode, water enters from the top to the bottom and exits through the lower part of the lamellar chamber. In sedimentation mode, the water to be treated travels from the bottom to the top and exits through the upper part of the lamellar area. Furthermore, the invention is complemented with a surface and bottom sweeper system which keeps clear of the installed lamellar structure for collecting both surface and decanted sludge.

### Brief Description of the Drawings

For the purpose of helping to better understand the features of the invention and to complement this description, the following illustrative and non-limiting drawings are attached as an integral part thereof:
Figure 1 shows the invention (side view) when the invention works in settler mode.
Figure 2 shows the invention working in dissolved air flotation mode.
Figure 3 is a detail (front view) of the carriage and scrapers.

### Detailed Description

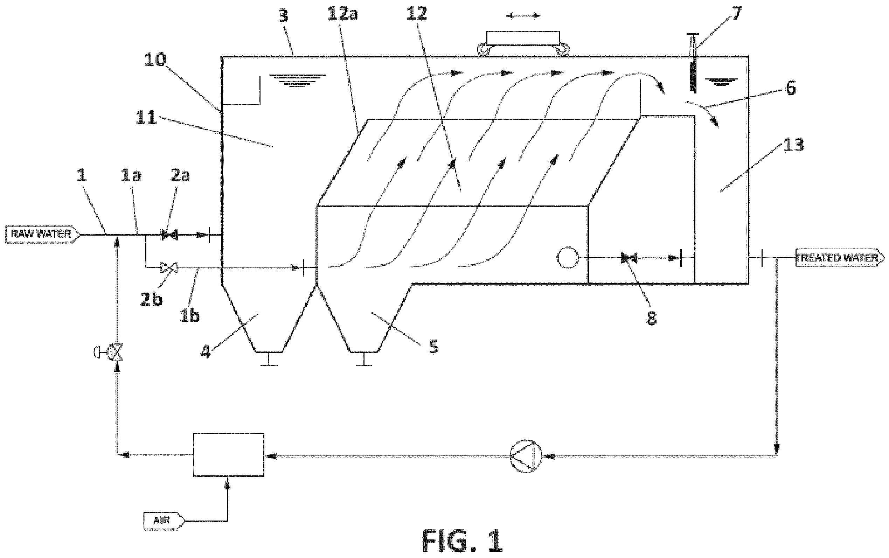

In reference to Figure 1, the system comprises a conduit 1 for the raw water to be treated and a treatment tank 10. The raw water inlet conduit 1 is divided into two parts, a first branch 1a extending to a first aggregation area 11 and a second branch 1b which is arranged below the first branch and prolonged further towards the area 12 where the lamellas 12a are arranged. Both conduits can be opened or closed by means of respective valves 2a and 2b. Therefore, when the device works as a settling tank, the upper valve 2a is closed and the water to be treated flows from the bottom to the top, flowing through the lamellas 12a such that solid waste decants at the bottom to be cleared away, as will be seen below, towards the drains 4 and 5 and to be purged from there. In this operating mode, the gate 7 is open and water exits through opening 6. The valve 8 is, however, closed.

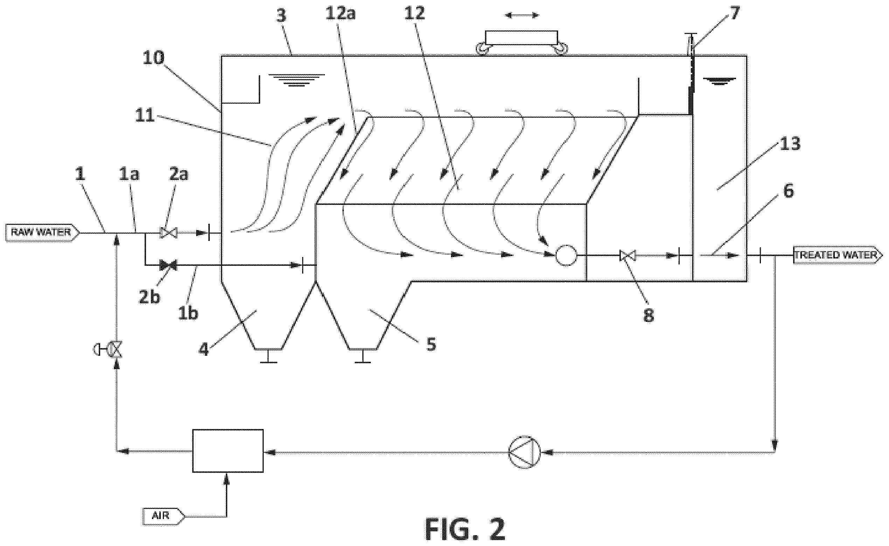

In flotation mode (Figure 2), the (already flocculated) raw water enters through conduit 1a; the lower valve 2b is closed. The water flows from the top, entering through the upper valve 2a, to the bottom, first going through the aggregation area 11 where it is mixed with air (microbubbles) and the separation effect is produced by means of dissolved air flotation. The aggregates gradually build up on the entire surface of the tank. The upper scraper associated with a travelling carriage moves along the surface and drives the sludge to a collection channel 3. It must be noted that this movement of the carriage also makes it easier to collect any sludge that may settle at the bottom. Once the aeration process has come to an end and the water has gone through the lamellas, it exits through point 6 through valve 8, which is open in this case.

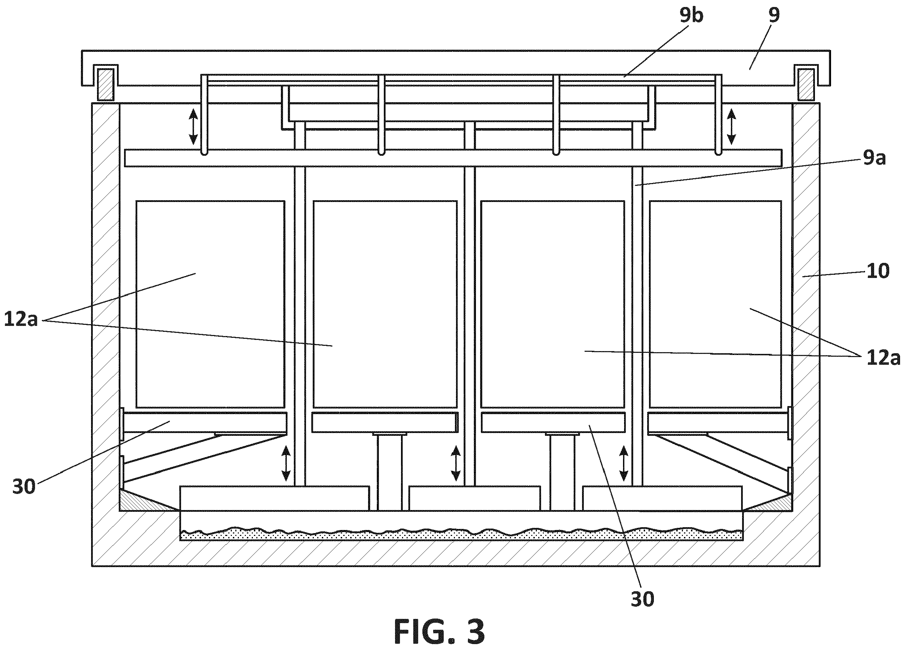

The invention is additionally provided with a carriage 9 provided with two scrapers, a surface sweeper scraper and a bottom sweeper scraper referred to as a lower scraper. The lower scraper 9a keeps clear of the installed lamellar structure for collecting both the surface and decanted sludge (Figure 3). To that end, it is divided into segments to keep clear of posts for holding the packs of lamellas 12a which are placed widthwise inside the tank 10 (the width of the tank is understood as the direction perpendicular to the water inlet, which would be the longitudinal dimension). The packs of lamellas are placed on supports 30 having the same width as said pack, but the supports are anchored either to the bottom of the tank 10 or to its side walls by means of thinner posts, leaving room for the segments of the lower scraper. Both the upper scraper 9b and the lower scraper 9a are additionally provided with a lifting system.

In view of this description and drawings, one skilled in the art will be able to understand that the invention has been described according to several preferred embodiments thereof, but multiple variations can be introduced in said preferred embodiments without going beyond the object of the invention as claimed.

## Claims

1. Integrated system for the treatment of water by means of dissolved air flotation and sedimentation, comprising a tank (10) with at least one flotation area (11) and another lamella area (12) and a sludge collection carriage (8) on the surface thereof, **characterized in that** it further comprises a raw water inlet conduit 1 which is divided into two parts, a first branch 1a extending to a first aggregation area (11) and a second branch (1b) which is arranged below the first branch and prolonged further towards the area where the lamellas (12a) are arranged, wherein the inlet conduit also comprises respective upper valve (2a) and lower valve (2b), such that the system works in decantation mode or in flotation mode, the conduit being adapted so that when the device works in decantation mode, the upper valve (2a) is closed, the water entering through the lower branch (1b) and the raw water flows from the bottom to the top, flowing through the lamellas (12a) such that solid waste decants at the bottom; in contrast, in flotation mode the raw water enters through the upper conduit (1a), the lower valve (2b) being closed, such that the water flows from the top to the bottom, going through the aggregation area (11) first.

2. System according to claim 1, furthermore provided with a sludge collection carriage with longitudinal translation means for longitudinal translation in the direction in which the water enters the tank (1).

3. System according to any of the preceding claims, wherein the sludge collection carriage is provided with a surface scraper and a lower scraper, both scrapers being adapted for varying their height inside the tank.

4. System according to claim 3, wherein the lower scraper is divided into different sections.
